# EUROPÄISCHE PATENTSCHRIFT

(11) **EP 0 768 230 B1**
(45) Veröffentlichungstag und Bekanntmachung des Hinweises auf die Patenterteilung: **22.12.1999**
(21) Anmeldenummer: 96115701.3
(22) Anmeldetag: 01.10.1996
(51) Int. Cl.: B62D 29/00, B62D 23/00, B62D 25/04

(54) **Karosseriemodul zur Verbindung wenigstens zweier Träger einer Fahrzeugkarosserie**
Body module for connecting at least two frame members of a car body
Module de carrosserie servant à la connection de, au moins, deux poutres d'une carrosserie automobile

(30) Priorität: 11.10.1995 DE 19537817
(43) Veröffentlichungstag der Anmeldung: 16.04.1997
(73) Patentinhaber: ED. Scharwächter GmbH, 42855 Remscheid (DE)
(72) Erfinder: Klüting, Bernd-Alfred, Dipl.-Ing., 42477 Radevormwald (DE)
(74) Vertreter: Sparing, Rolf Klaus, Dipl.-Wirtsch.-Ing.

(56) Entgegenhaltungen:
- EP-A- 0 631 924
- EP-A- 0 671 312
- DE-A- 4 014 385
- DE-A- 4 214 557
- DE-A- 19 519 779

## Beschreibung

Die Erfindung bezieht sich auf ein **Karosseriemodul zur Verbindung wenigstens zweier zueinander beabstandeter Karosserieträger, einer Fahrzeugkarosserie, an welches mittels als räumliche Formteile ausgebildeter Knotenteile und Anschlußmitteln wenigstens zwei durch Hohlprofile gebildete Karosserieträger anschließbar sind.**

Karosseriemodule der vorgenannten Art sind in den verschiedensten Gestaltungsformen bekannt, wobei sie jedoch, soweit sie als Karosseriesäulen eingesetzt sind, aus einem Säulenteil und zwei eigenständige Fornteile bildenden Knotenteilen bestehen, wie z.B. aus der EP-A-0 671 312 bekannte. Solche Konstruktionen werden im modernen Karosseriebau hauptsächlich zur gegenseitigen Verbindung von wenigstens zwei durch Strangpressprofilabschnitte gebildeten Karosserieträgern eingesetzt. Bei einer bekannten Bauart von als Karosseriesäulen ausgebildeten Karosseriemodulen DE-OS 195 19 779 ist das mit den durch eigenständige Formteile gebildeten Knotenelementen verbundene Säulenteil durch einen Strangprofilabschnitt mit einteilig angeformter Scharnierhälfte gebildet, jedoch setzt diese Bauart die Verwendung eines als Profilmaterialabschnitt ausgebildeten und beidendig mit eigenständige Formteile bildenden Knotenelementen verbundenes Scharniersäulenteil vorraus. Es ist ferner auch bereits vorgeschlagen worden (DE-A-40 14 385) zum Anbau von Scharnierglenken an als geschlossenes Formteil ausgebildeten Karosseriemodulen in diesen Ausklinkungen oder dergl. vorzusehen und die anzufügenden Scharniergelenkteile in die solcherart gebildete Öffnung im Karosseriemodul einzuschweißen. Diese Verfahrensweise zeichnet sich durch einen Aufwand für das Anbringen von Scharniergelenkteilen aus, da das Einschweißen der Scharniergelenkteile passgerecht erfolgen muß und zu einem Verziehen des Karosseriemoduls führen kann,

Der Erfindung liegt daher die Aufgabe zugrunde ein als Karosseriesäule eingesetztes Karosseriemodul zur Verbindung wenigstens zweier Karosserielängsträger einer Fahrzeugkarosserie derart weiter zu verbessern, daß es ohne oder zumindest ohne nennenswerten Mehraufwand zusätzliche Aufgaben bzw. Funktionen erfüllen kann, insbesondere dahingehend, daß es wenigstens einen Teil der bisher getrennt behandelten Ausbildung bzw. Anbringung einer Türanlenkung und/oder Türfeststellung für eine Kraftwagentüre übernehmen kann.

Diese Aufgabe wird durch die Merkmale des Anspruchs 1 gelöst.

Die bisher bekannt gewordenen Ausführungsformen von Karosseriemodulen, gleichgültig ob sie jeweils lediglich als einfache Knotenteile zur Verbindung lediglich im wesentlichen senkrecht aufeinander stehend angeordneter Karosserieträger und Karosseriesäulen oder aber wenigstens als Teilstücke von Karosseriesäulen ausgebildet sind, sind jeweils lediglich mit Anschlußelementen für die als Hohlträger ausgebildeten Karosserielängs-bzw. Querträger ausgestattet, so daß sich in jedem Falle das Problem der Anlenkung der Fahrzeugtüre über gesondert ausgebildete und anzuschlagende Scharniergelenke ergibt. Durch die erfindungsgemäß vorgeschlagene Ausgestaltung solcher Karosseriemodule kann in vorteilhafter Weise die mit der Verbindung von Scharnierflügeln oder dergl. mit einem Knotenteil verbundene Problematik sowohl hinsichtlich des erforderlichen Montageaufwandes als auch hinsichtlich der Anzahl der erforderlichen Einzelteile beseitigt werden, ohne daß ein zusätzlicher Aufwand anfällt. Als besonderer Vorteil ergibt sich dabei zudem eine außerordentliche Festigkeit der Verbindung zwischen Scharniergelenkteil und Karosseriemodul.

Vorteilhafte weiterbildungen sind in den abhängigen Ansprüchen aufgezeigt.

Die Erfindung ist in der nachfolgenden Beispielsbeschreibung anhand eines in der Zeichnung dargestellten Ausführungsbeispieles im einzelnen beschrieben.
In der Zeichnung zeigt die
- Figur 1: eine schematische schaubildliche Darsteellung eine mit einem erfindungsgemäßen Karosseriemodul ausgestatteten Kraftfahrzeuges;
- Figur 2: eine schaubildliche Ansicht eines Karosseriemodules und Bruchstücke der angrenzenden Karosserieträger;
- Figur 3: einen Teilschnitt durch eine erste Ausführungsform eines Karosseriemodules;
- Figur 4: einen Teilschnitt durch eine zweite Ausführungsform eines Karosseriemodules.

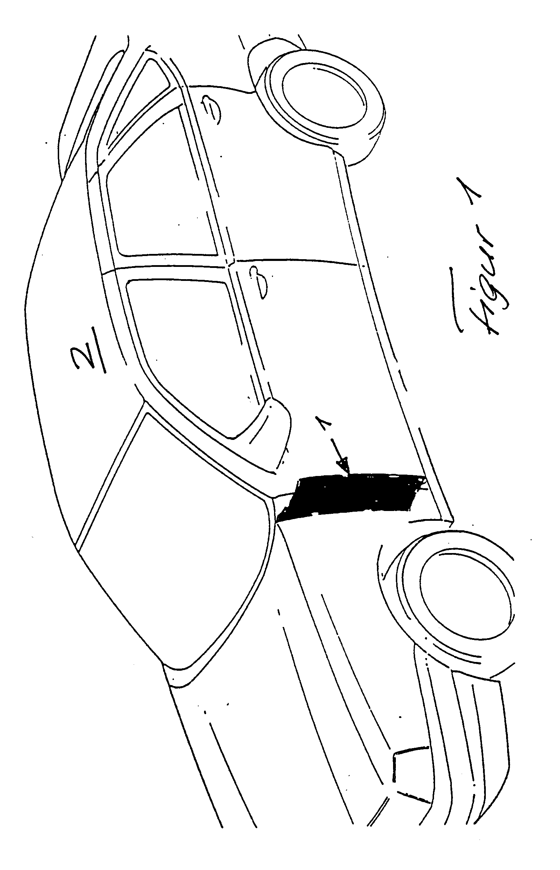

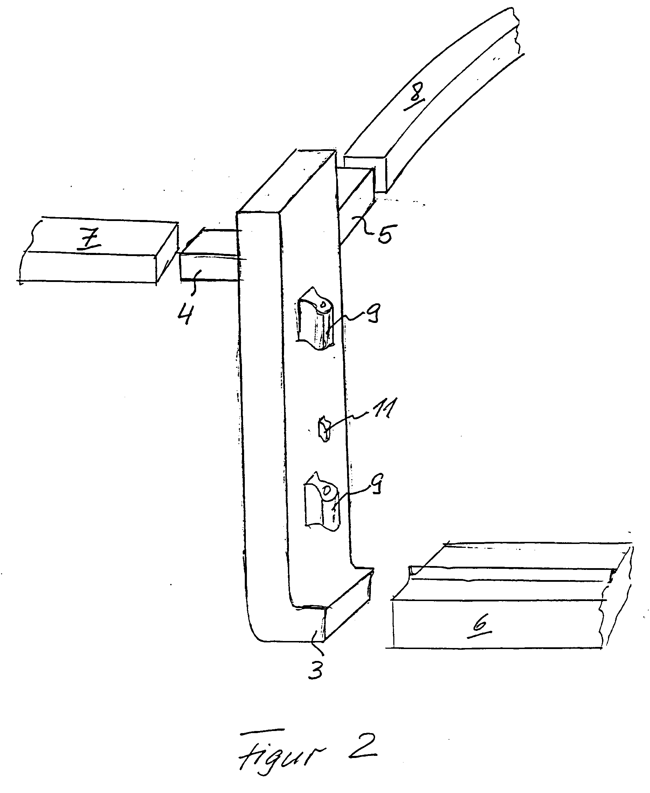

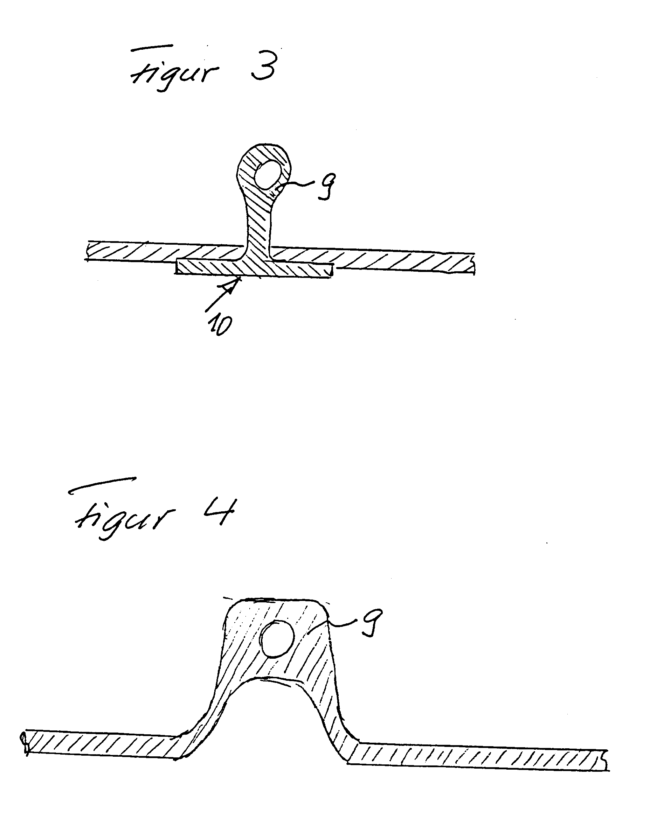

Das im Ausführungsbeispiel gezeigte Karosseriemodul ist als Sockelteil der A-Säule 1 einer Fahrzeugkarosserie 2 ausgebildet und mit Anschlußmitteln 3,4 und 5 sowohl für jeweils als Hohlträger, insbesondere aus Strangpressprofilabschnitten, ausgebildete Karosserielängsträger einerseits eines Schwellers 6 und andererseits sowohl eines Vorbauträgers 7 als auch für einen Dachsäulenträger und einen Karosseriequerträger 8, insbesondere Windlaufträger 8 sowie unlösbar angeschlossenen Scharniergelenkteilen 9 versehen.
Das in der Figur 3 gezeigte Karosseriemodul ist im Wege der Innenhochdruckverformung aus einem einteiligen Stragpressprofilabschnitt geformt. Die angeschlossenen Scharniergelenkteile 9 sind ihrerseits durch gesondert hergestellte Bauteile, insbesondere Scharnierhälften 10, gebildet und im Zuge des Umformens des Strangpressprofilzuschnittes unlösbar mit dem Karosseriemodul verbunden worden. Desgleichen ist auch die Schwenklagerung 11 für die Türhaltestange eines Türfeststellers durch ein gesondert hergestelltes Bauteil gebildet und mit dem Karosseriemodul in Zuge der Innenhochdruckumformung unlösbar verbunden.
Das in der Figur 4 gezeigte Karosseriemodul ist als Gußteil aus einem Leichtbauwerkstoff, beispielsweise magnesiumguß, ausgebildet, wobei die Scharniergelenkteile 9 und auch die Schwenklagerung 11 für die Türhaltestange eines Türfeststellers form und Materialeinheitlich mit dem Körper des Karosseriemodules ausgebildet sind.
Sowohl die Herstellung des Karosseriemodules als im Wege des Innenhochdruckverformens gestaltetes Teil als auch die Herstellung des Karosseriemodules als Guß-, insbesondere Spritzußteil gestattet es das Karosseriemodul mit einheitlich angeformten sonstigen, in der schematischen Darstellung der Zeichnung nicht besonders dargestellten Funktionteilen auszustatten, beispielsweise können angeformte Nuten für die Verankerung von Dichtprofilen oder aber angeformte Profilflügel für den Anschluß von Karosseriebeplankungsteilen vorgesehen sein.

## Patentansprüche

1. Karosseriemodul (1, 3-5) zur Verbindung wenigstens **zweier zueinander beabstandeter** Karosserieträger (6-8) einer Fahrzeugkarosserie, an welches mittels als räumliche Formteile ausgebildeter Knotenteile und Anschlußmitteln wenigstens zwei durch Hohlprofile gebildete Karosserieträger (6-8) anschließbar sind,
dadurch gekennzeichnet, daß das Karosseriemodul als Scharniersäule (1) ausgebildet und beidendig mit einteilig angeformten Knotenelementen (3-5) zur Verbindung wenigstens zweier zueinander beabstandeter, durch Hohlprofile gebildeter Karosserieträger versehen ist, wobei die scharniersäule (1) und die Knotenelemente (3-5) ein einteiliges räumliches Formteil bilden, und wobei die Scharniersäule (1) mit wenigstens einem unlösbar angeschlossenen Scharniergelenkteil (9) ausgestattet ist.

2. Karosseriemodul nach Anspruch 1, dadurch gekennzeichnet, daß es **wenigstens einseitig mit einem weiteren einteilig angeformten Knotenelement** zur Verbindung zweier aufeinander senkrecht stehender, jeweils durch Hohlprofile gebildeter Karosserieträger ausgestattet ist.

3. Karosseriemodul nach einem der Ansprüche 1 und 2, dadurch gekennzeichnet, daß es zusammen mit dem wenigstens einem Scharniergelenkteil als räumlich geformtes Spritzgußteil ausgebildet ist.

4. Karosseriemodul nach einem der Ansprüche 1 und 2, dadurch gekennzeichnet, daß es aus einem im Wege der Innenhochdruckverformung räumlich verformten Hohlprofilabschnitt gebildet ist.

5. Karosseriemodul nach Anspruch 4, dadurch gekennzeichnet, daß es durch einen räumlich verformten Hohlprofilabschnitt gebildet ist und die angeschlossenen Scharniergelenkteile als gesondert hergestellte Bauteile im Zuge des Umformens des Hohlprofilzuschnittes unlösbar mit dem Karosseriemodul verbunden sind.

6. Karosseriemodul nach Anspruch 3, dadurch gekennzeichnet, daß es durch ein räumlich geformtes Spritzgußteil mit als gesondertes Bauteil hergestellten und im Wege des Verbundgießens eingegossenen Scharniergelenkteilen gebildet ist.

7. Karosseriemodul nach einem der Ansprüche 1 bis 6, dadurch gekennzeichnet, daß es wenigstens das Gehäuse eines Türfeststellers enthält.

8. Karosseriemodul nach einem der Ansprüche 1 bis 7, dadurch gekennzeichnet, daß es zusätzlich zu dem Scharniergelenkteilen sowie Anschlußmitteln für einen Türfeststeller mit Anschluß-bzw. Befestigungsmitteln für eine durch Kunststofformplatten gebildete Karosserieaußenhaut versehen ist.

## Claims

1. Vehicle body module (1, 3-5) for connecting at least two spaced vehicle body beams (6-8) of a motor vehicle body, to which at least two vehicle body beams (6-8) formed by hollow sections may be connected by means of junctions constructed as spatial moulded parts and connection means, characterised in that the vehicle body module is constructed as a hinge column (1) and is provided at both ends with junction elements (3-5) moulded on in one piece for the connection of at least two spaced vehicle body beams formed by hollow sections, whereby the hinge column (1) and the junction elements (3-5) form a spatial moulded part in one piece, and whereby the hinge column (1) is fitted with at least one detachably connected hinge joint part (9).

2. Vehicle body module according to Claim 1, characterised in that it is fitted at least on one side with a further junction element moulded on in one piece for the connection of two vehicle body beams standing perpendicularly on one another and respectively formed by hollow sections.

3. Vehicle body module according to one of Claims 1 and 2, characterised in that together with the at least one hinge joint part, it is constructed as a spatially formed injection moulding.

4. Vehicle body module according to one of Claims 1 and 2, characterised in that it is formed from a hollow section segment spatially deformed in the course of the internal high pressure deformation.

5. Vehicle body module according to Claim 4, characterised in that it is formed by a spatially deformed hollow section segment and the connected hinge joint parts are undetachably connected to the vehicle body module as separately produced structural parts during the course of the reshaping of the hollow section segment.

6. Vehicle body module according to Claim 3, characterised in that it is formed by a spatially formed injection moulding with hinge joint parts produced as a separate structural part and cast in during the course of the compound casting.

7. Vehicle body module according to one of Claims 1 to 6; characterised in that it contains at least the housing of a door fastener.

8. Vehicle body module according to one of Claims 1 to 7; characterised in that in addition to the hinge joint parts and also the connection means for a door fastener, it is provided with connection or fastening means for an outer body skin formed by moulded plastic panels.

## Revendications

1. Module de carrosserie (1, 3-5) pour relier au moins deux supports de carrosserie, disposés à une certaine distance l'un de l'autre, avec lequel peuvent être assemblés au moins deux supports de carrosserie (6-8), constitués de profilés creux, par l'intermédiaire de moyens de raccordements et de pièces moulées tridimensionnelles pourvues de saillies, **caractérisé en ce que** le module de carrosserie servant de support de charnière (1) est pourvu à chacune de ses extrémités de saillies (3-5) formées sur et constituant une pièce unique avec le module, permettant de relier au moins deux supports de carrosserie disposés à une certaine distance l'un de l'autre et constitués de profilés creux, étant observé que le support de charnière (1) et les saillies (3-5) forment ensemble une pièce moulée unique tridimensionnelle et que le support de charnière (1) comporte au moins un élément indétachable (9) pour l'articulation de la charnière.

2. Module de carrosserie selon la revendication 1 **caractérisé en ce que** il est pourvu au moins d'un côté d'une saillie supplémentaire formée sur et constituant une pièce unique avec le module, destinée à relier deux support de carrosserie verticaux, constitués de profilés creux et disposés l'un sur l'autre.

3. Module de carrosserie selon l'une des revendications 1 et 2 **caractérisé en ce que** il est constitué, ensemble avec le ou les éléments pour l'articulation de la charnière (9), d'une pièce tridimensionnelle moulée par injection.

4. Module de carrosserie selon l'une des revendications 1 et 2 **caractérisé en ce que** il est constitué d'un segment de profilé creux tridimensionnel, déformé par un procédé de formage par haute pression interne.

5. Module de carrosserie selon la revendication 4 **caractérisé en ce que** il est constitué d'un segment de profilé creux déformé par un procédé de formage par haute pression interne et **en ce que** les éléments pour l'articulation de la charnière sont des pièces fabriquées séparément, assemblées de manière indétachable avec le module de carrosserie au cours du processus de déformation tridimensionnelle du segment de profilé creux.

6. Module de carrosserie selon la revendication 3 **caractérisé en ce que** il est constitué d'une pièce tridimensionnelle moulée par injection, pourvue d'éléments pour l'articulation de la charnière fabriqués séparément et assemblés avec le module par un moulage composite.

7. Module de carrosserie selon l'une des revendications 1 à 6 **caractérisé en ce que** il comporte au moins un boîtier pour arrêtoir de porte.

8. Module de carrosserie selon l'une des revendications 1 à 7 **caractérisé en ce que** il comporte, outre les éléments pour l'articulation de la charnière et les moyens de raccordement pour un arrêtoir de porte, des moyens de raccordement, respectivement de fixation des éléments de la surface extérieure de la carrosserie, constitués de plaques moulées en matière synthétique.
